# EUROPEAN PATENT APPLICATION

(11) **EP 4 672 448 A1**
(43) Date of publication of application: **31.12.2025**
(21) Application number: 25166941.2
(22) Date of filing: 28.03.2025
(51) Int. Cl.: H01M 50/166, H01M 50/109, H01M 50/148, H01M 50/152, H01M 50/153, H01M 50/188, H01M 10/04, H01M 50/107

(54) **SECONDARY BATTERY AND METHOD OF MANUFACTURING SAME**

(30) Priority: 25.06.2024 KR 20240082928
(71) Applicant: SAMSUNG SDI CO., LTD., Yongin-si, Gyeonggi-do 17084 (KR)
(72) Inventor: YUN, Jiwon, 17084 Yongin-Si Gyeonggi-do (KR)
(74) Representative: Gulde & Partner

(57) **Abstract**

A secondary battery including an electrode assembly including a first electrode, a separator, and a second electrode, a case accommodating the electrode assembly and electrically connected to the second electrode, a cap assembly closing an opening of the case and electrically connected to the first electrode, and a cover having a through-hole, the cover being press-fit onto the case to fasten the cap assembly to the case.

## Description

### BACKGROUND

### 1. Field

Aspects of embodiments of the present disclosure relate to a secondary battery and a method for manufacturing the same.

### 2. Description of the Related Art

Unlike primary batteries that are not designed to be (re)charged, secondary (or rechargeable) batteries are batteries that are designed to be discharged and recharged. Low-capacity secondary batteries are used in portable, small electronic devices, such as smart phones, feature phones, notebook computers, digital cameras, and camcorders, while large-capacity secondary batteries are widely used as power sources for driving motors in hybrid vehicles and electric vehicles and for storing power (e.g., home and/or utility scale power storage). A secondary battery generally includes an electrode assembly composed of a positive electrode and a negative electrode, a case accommodating the same, and electrode terminals connected to the electrode assembly.

In general, a secondary battery includes an electrode assembly accommodated in a case and a cap assembly coupled to an opening of the case and secured to the case by welding. During the welding process, however, heat generated by the welding may cause an insulating tape or the like to melt, leading to a reduction in insulation performance.

The above information disclosed in this Background section is for enhancement of understanding of the background of the present disclosure, and therefore, it may contain information that does not constitute related (or prior) art.

### SUMMARY

Embodiments of the present disclosure provide a secondary battery and a method for manufacturing the secondary battery.

These and other aspects and features of the present disclosure will be described in or will be apparent from the following description of embodiments of the present disclosure.

According to one or more embodiments of the present disclosure, a secondary battery includes: an electrode assembly including a first electrode, a separator, and a second electrode; a case accommodating the electrode assembly and electrically connected to the second electrode; a cap assembly closing an opening of the case and electrically connected to the first electrode; and a cover having a through-hole. The cover is press-fit onto the case to fasten the cap assembly to the case.

In an embodiment, the cover may include: a pressing portion that may has a through-hole and may be placed onto an upper side of the case to bring the cap assembly into close contact with the case by pressing the cap assembly; and a fastening portion that extends vertically from an outer edge of the pressing portion and may be fastened to a side surface of the case.

In an embodiment, the fastening portion may have different thicknesses along an extension direction of the fastening portion.

In an embodiment, the fastening portion may include: a connecting portion that may be connected to the pressing portion; a contact portion that extends from the connecting portion and may have a thickness greater than that of the connecting portion; and an insertion portion that extends from the contact portion and may have a thickness smaller than that of the contact portion.

In an embodiment, the fastening portion further may include: an elastic deformation portion at an end of the contact portion that may be pressed against the case and elastically bent outward in a radial direction.

In an embodiment, the contact portion may include a groove configured to avoid contact with the elastic deformation portion when the elastic deformation portion is deformed.

In an embodiment, the groove may have a width such that the elastic deformation portion does not come into contact with an inner peripheral surface of the groove when the elastic deformation portion is deformed.

In an embodiment, the elastic deformation portion may have an outer peripheral surface having a rounded shape.

In an embodiment, the connecting portion may have a substantially constant thickness, and a diameter of an inner peripheral surface of the connecting portion may be at least equal to or greater than a diameter of an outer peripheral surface of the case.

In an embodiment, a diameter of an inner peripheral surface of the contact portion may be smaller than a diameter of an outer peripheral surface of the case.

In an embodiment, a diameter of an inner peripheral surface of the insertion portion may be at least equal to or greater than a diameter of an outer peripheral surface of the case.

In an embodiment, the cap assembly may include: a cap plate having an insertion hole that may extend into a fastening groove at an upper side of the case; a terminal plate on the cap plate having a protrusion configured to be inserted into the insertion hole of the cap plate and electrically connected to the first electrode; and an insulator between the cap plate and the terminal plate.

In an embodiment, the cap plate may be in close contact with an inner surface of the cover, and the terminal plate may be inserted into the through-hole of the cover.

In an embodiment, a diameter of the through-hole in the cover may be greater than a diameter of the terminal plate to avoid contact with the terminal plate.

According to one or more embodiments of the present disclosure, a method for manufacturing a secondary battery includes: placing a case accommodating an electrode assembly and a cap assembly onto a lower jig; placing a cover having a through-hole onto the case; and pressing the cover to fasten the cover to the case and bring the cap assembly into close contact with the case.

In an embodiment, the pressing of the cover may include: pressing an upper surface of the cover until a predetermined gap may be established between the cover and the cap assembly; and pressing a perimeter of the cover until the cover may be placed on an upper side of the case.

In an embodiment, the pressing of the upper surface of the cover may include pressing the upper surface of the cover until an inner surface of the cover and an upper surface of the cap assembly may have a gap of approximately 0.5 mm to approximately 2.0 mm.

In an embodiment, the cover may include: a pressing portion having the through hole and may be placed on the upper side of the case; and a fastening portion that extends vertically from an outer end of the pressing portion may be fastened to a side surface of the case.

In an embodiment, the pressing of the perimeter of the cover may include pressing the pressing portion to bring the cap assembly into close contact with the case.

In an embodiment, as the cover may be pressed, an elastic deformation portion of the fastening portion may be pressed by the case and elastically bent outward in a radial direction, thereby guiding insertion of the case.

According to some embodiments of the present disclosure, by press-fitting the cover to the case, the cap assembly can be securely fixed to the case, thereby preventing or at least mitigating deterioration in insulation performance caused by welding.

According to some embodiments of the present disclosure, the cover is provided with the elastic deformation portion, making it easier to fasten the cover to the case.

According to some embodiments of the present disclosure, the elastic deformation portion is in the area of the cover that comes into close contact with the case, thereby reducing the pressing force applied to the case.

However, aspects and features of the present disclosure are not limited to those described above, and other aspects and features not mentioned will be clearly understood by a person skilled in the art from the detailed description, described below.

### BRIEF DESCRIPTION OF DRAWINGS

The following drawings attached to this specification illustrate embodiments of the present disclosure, and further describe aspects and features of the present disclosure together with the detailed description of the present disclosure. Thus, the present disclosure should not be construed as being limited to the drawings:
FIG. 1 is a perspective view illustrating a secondary battery according to one embodiment of the present disclosure.
FIG. 2 is an exploded perspective view illustrating a secondary battery according to one embodiment of the present disclosure.
FIG. 3 is a cross-sectional view illustrating a secondary battery according to one embodiment of the present disclosure.
FIG. 4 is an exploded cross-sectional view illustrating a secondary battery according to one embodiment of the present disclosure.
FIG. 5 is an enlarged view illustrating an area A of FIG. 4 according to one embodiment of the present disclosure.
FIG. 6 is an enlarged view illustrating an area B of FIG. 4 according to one embodiment of the present disclosure.
FIG. 7 is a cross-sectional view illustrating an elastic deformation portion being deformed according to one embodiment of the present disclosure.
FIG. 8 is a cross-sectional view illustrating an elastic deformation portion according to one embodiment of the present disclosure.
FIG. 9 is a cross-sectional view illustrating a method for manufacturing a secondary battery according to one embodiment of the present disclosure.
FIG. 10 is a cross-sectional view illustrating a task in which a secondary battery is pressed by a first pressing jig in a method for manufacturing the secondary battery according to one embodiment of the present disclosure.
FIG. 11 is a cross-sectional view illustrating the elastic deformation portion being deformed in a method for manufacturing a secondary battery according to one embodiment of the present disclosure.
FIGS. 12 and 13 are cross-sectional views illustrating a task in which a secondary battery is pressed by a second pressing jig in a method for manufacturing the secondary battery according to one embodiment of the present disclosure.
FIG. 14 is a flowchart illustrating a method for manufacturing a secondary battery according to one embodiment of the present disclosure.

### DETAILED DESCRIPTION

Hereinafter, embodiments of the present disclosure will be described, in detail, with reference to the accompanying drawings. The terms or words used in the present specification and claims are not to be limitedly interpreted as general or dictionary meanings and should be interpreted as meanings and concepts that are consistent with the technical idea of the present disclosure on the basis of the principle that an inventor can be his/her own lexicographer to appropriately define concepts of terms to describe his/her invention in the best way.

The embodiments described in this specification and the configurations shown in the drawings are only some of the embodiments of the present disclosure and do not represent all of the technical spirit, aspects, and features of the present disclosure. Accordingly, it should be understood that there may be various equivalents and modifications that can replace or modify the embodiments described herein at the time of filing this application.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein. All such ranges are intended to be inherently described in this specification.

References to two compared elements, features, etc. as being "the same" may mean that they are "substantially the same". Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

Arranging an arbitrary element "above (or below)" or "on (under)" another element may mean that the arbitrary element may be disposed in contact with the upper (or lower) surface of the element, and another element may also be interposed between the element and the arbitrary element disposed on (or under) the element.

In addition, it will be understood that when a component is referred to as being "linked," "coupled," or "connected" to another component, the elements may be directly "coupled," "linked" or "connected" to each other, or another component may be "interposed" between the components".

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

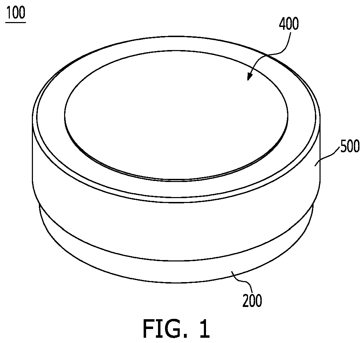

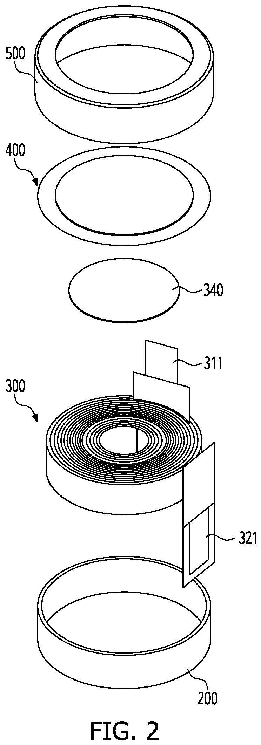

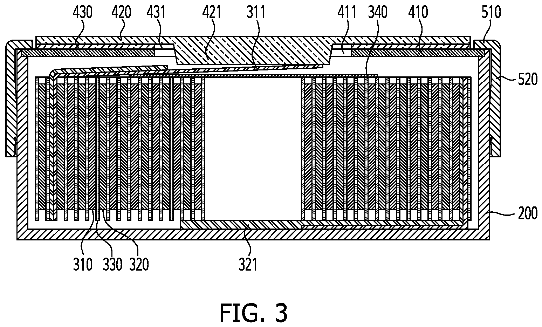

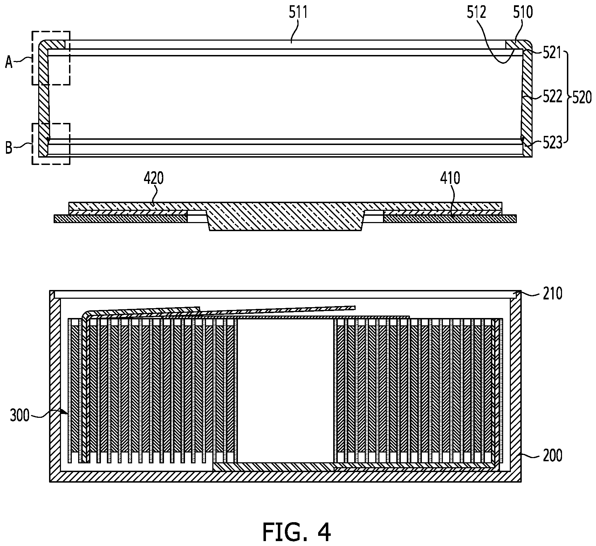

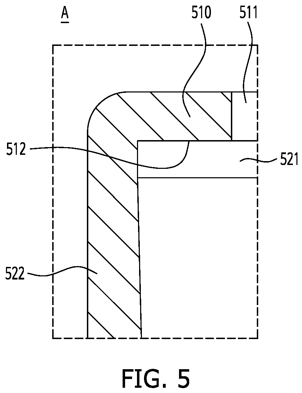

FIG. 1 is a perspective view illustrating a secondary battery according to one embodiment of the present disclosure, and FIG. 2 is an exploded perspective view illustrating a secondary battery according to one embodiment of the present disclosure. FIG. 3 is a cross-sectional view illustrating a secondary battery according to one embodiment of the present disclosure, and FIG. 4 is an exploded cross-sectional view illustrating a secondary battery according to one embodiment of the present disclosure. FIG. 5 is an enlarged view illustrating an example of an area A of FIG. 4.

Referring to FIGS. 1 to 5, a secondary battery 100 according to one embodiment of the present disclosure may include: an electrode assembly 300 including a first electrode 310, a separator 330, and a second electrode 320; a case 200 accommodating the electrode assembly 300 and electrically connected to the second electrode 320; a cap assembly 400 closing an opening of the case 200 and electrically connected to the first electrode 310; and a cover 500 having a through-hole 511 at its center (or substantially at its center). In one or more embodiments, the cover 500 is press-fit to the case 200 to fasten the cap assembly 400 to the case 200.

The electrode assembly 300 may include the separator 330 and the first electrode 310 and the second electrode 320 positioned with the separator 330 interposed therebetween and may be wound in a jelly-roll shape.

The first electrode 310 includes a first substrate and a first active material layer on the first substrate. A first lead tab 311 may extend outwardly from a first uncoated portion of the first substrate at where the first active material layer is not located, and the first lead tab 311 may be electrically connected to the cap assembly 400.

The second electrode 320 includes a second substrate and a second active material layer on the second substrate. A second lead tab 321 may extend outwardly from a second uncoated portion of the second substrate at where the second active material layer is not located, and the second lead tab 321 may be electrically connected to the case 200. The first lead tab 311 and the second lead tab 321 may extend in opposite directions.

The first electrode 310 may act as a positive electrode. In such an embodiment, the first substrate may be made of, for example, an aluminum foil, and the first active material layer may include, for example, a transition metal oxide. The second electrode 320 may act as a negative electrode. In such an embodiment, the second substrate may be made of, for example, a copper foil or a nickel foil, and the second active material layer may include graphite, for example.

The separator 330 prevents a short circuit between the first electrode 310 and the second electrode 320 while allowing movement of lithium ions therebetween. The separator 330 may be made of, for example, a polyethylene film, a polypropylene film, a polyethylene-polypropylene film, or the like.

The case 200 accommodates the electrode assembly 300 and, together with the cap assembly 400, forms the external appearance of the secondary battery. The case 200 may have a substantially cylindrical body portion and a bottom portion connected to one side (e.g., to one end) of the body portion. The case 200 may be made of a metal, such as aluminum, aluminum alloy, or nickel-plated steel, a laminated film, or plastic (e.g., in a pouch-type embodiment). The second lead tab 321 may be attached to the bottom portion of the case 200 and electrically connected thereto.

The cap assembly 400 may include a cap plate 410 having an insertion hole 411 at its center (or substantially at its center), a terminal plate 420 on the cap plate 410 and including a protrusion 421 inserted into the insertion hole 411, and an insulator 430 between the cap plate 410 and the terminal plate 420.

The cap plate 410 may have a disc shape with the insertion hole 411 at the center (or substantially the center) thereof. The cap plate 410 may have a diameter greater than diameters of the terminal plate 420 and the insulator 430 (e.g., the cap plate 410 may extend outward beyond the terminal plate 420 and the insulator 430). The cap plate 410 may extend into a fastening groove 210 that is recessed at an upper end of the case 200 to close the opening of the case 200. However, the shape of the cap plate 410 is not limited thereto and it may be formed in various shapes corresponding to the shape of the case to which the cap plate 410 is fastened.

The terminal plate 420 may have a disc shape with a diameter smaller than the diameter of the cap plate 410 and may have the protrusion 421 formed at the center thereof (or substantially the center thereof) to be inserted into the insertion hole 411 of the cap plate 410. The protrusion 421 may protrude beyond the cap plate 410 when inserted into the insertion hole 411. The protrusion 421 may be configured such that the first lead tab 311 is attached thereto. The shape of the terminal plate 420 is not limited to the disc shape and may be formed in various shapes corresponding to the shape of the cap plate 410. As described above, the first lead tab 311 is attached to the protrusion 421, and the second lead tab 321 is attached to the case 200, so that the terminal plate 420 may function as the positive electrode, and the case 200 may function as the negative electrode.

The insulator 430 may be between the cap plate 410 and the terminal plate 420 to electrically insulate the cap plate 410 from the terminal plate 420. The cap plate 410 and the terminal plate 420 may be made of conductive metal materials and are electrically connected to the negative electrode (i.e., the second lead tab 321) and the positive electrode (i.e., the first lead tab 311), respectively. The insulator 430 is configured to prevent a short circuit by insulating the cap plate 410 from the terminal plate 420. The insulator 430 may be made of a resin such as polypropylene (PP) or polyethylene (PE).

The insulator 430 may have a disc shape with an insertion hole 431 formed at the center thereof (or substantially the center thereof), similar to the cap plate 410. Due to this configuration, the protrusion 421 of the terminal plate 420 may pass through the insertion hole 431 of the insulator 430 and the insertion hole 411 of the cap plate 410, thereby allowing the first lead tab 311 to be attached to the protrusion 421. An outer diameter of the insulator 430 may be the same as or similar to an outer diameter of the terminal plate 420. The cap plate 410 may have an outer diameter greater than the outer diameters of the insulator 430 and the terminal plate 420. Further, a diameter of the insertion hole 431 of the insulator 430 may be the same as or similar to diameter of the insertion hole 411 of the cap plate 410. In one or more embodiments, the insertion holes 431 and 411 may be concentric or substantially concentric.

The insulator 430 may be attached to the cap plate 410 and the terminal plate 420 by a heat fusion method in which the cap plate 410 and the terminal plate 420 are heated and pressed while the insulator 430 is positioned therebetween.

In order to insulate between the cap plate 410 and the first lead tab 311, an insulating washer may be between the cap plate 410 and the first lead tab 311. Additionally, in order to insulate between an upper portion of the electrode assembly 300 and the first lead tab 311, an insulating sheet 340 may be on the upper portion of the electrode assembly 300.

The battery (e.g., the secondary battery 100) described with reference to FIG. 3, may be a coin-type battery or a button-type battery. However, the type of the battery is not limited thereto, and other types of secondary batteries (e.g., cylindrical batteries) may be used. Further, while FIG. 3 illustrates the first lead tab 311 protruding upwardly and connecting to the cap assembly 400, and the second lead tab 321 protruding downwardly and connecting to the case 200, the present disclosure is not limited thereto. For example, the first lead tab 311 and the second lead tab 321 may both protrude upwardly and connect to the cap assembly 400 and the case 200, respectively.

The cover 500 may have the through-hole 511 at the center thereof (or substantially the center thereof) and the cover 500 may be press-fitted onto the case 200 to fasten the cap assembly 400 to the case 200. In one embodiment, the cover 500 may include a pressing portion 510 that has the through-hole 511 and is placed (seated) on the upper side of the case 200 to bring the cap assembly 400 into contact with the case 200 by pressing the cap assembly. In one or more embodiments, the cover 500 may include a fastening portion 520 that extends vertically (e.g., vertically downward) from an outer edge of the pressing portion 510 and is fastened to a side surface of the case 200. In one or more embodiments, the fastening portion 520 may have different thicknesses at different positions along an extension direction of the fastening portion 520.

In a configuration in which the cap plate 410 is inserted and positioned in the fastening groove 210 of the case 200, the cover 500 may be press-fitted onto the case 200 from above such that an inner surface 512 of the pressing portion 510 of the cover 500 is in close contact with and presses against an outer surface of the cap plate 410, thereby securely fastening the cap plate 410 to the case 200. With the cap plate 410 being in close contact with and pressed by the inner surface 512 of the pressing portion 510, the terminal plate 420 may be exposed outwardly through the through-hole 511 of the cover 500. In one or more embodiments, a diameter of the through-hole 511 of the cover 500 may be greater than the diameter of the terminal plate 420 to ensure that the cover 500 does not come into contact with the terminal plate 420. The cover 500 is in contact with the case 200 and the cap plate 410 so that the cover 500 functions as the negative electrode and the terminal plate 420 functions as the positive electrode. Therefore, the cover 500 may be configured to avoid contact with the terminal plate 420 to prevent (or at least mitigate) a short circuit from occurring. Further, for electrical insulation, the cover 500 may be made from an insulating material such as plastic or the like.

The fastening portion 520 may be in close contact with the side surface of the case 200. In one or more embodiments, the thickest part of the fastening portion 520 may be in close contact with the side surface of the case 200 and may exert a strong pressure against the side surface of the case 200, thereby enabling the cover 500 to be press-fitted onto the case 200. In one embodiment, the fastening portion 520 may include a connecting portion 521 that is connected to the pressing portion 510 and the extends substantially perpendicular to the pressing portion 510, a contact portion 522 that extends from the connecting portion 521 and has a thickness greater than the thickness of the connecting portion 521, and an insertion portion 523 that extends from the contact portion 522 and has a thickness smaller than the thickness of the contact portion 522.

The connecting portion 521 may have a constant thickness (or substantially constant thickness), and a diameter of an inner peripheral surface of the connecting portion 521 may be at least equal to or greater than a diameter of an outer peripheral surface of the case 200. The connecting portion 521 may have a predetermined length with the constant thickness (or substantially constant thickness). When a radially outwardly applied force is generated as the contact portion 522 comes into close contact with the outer peripheral surface of the case 200, the force is distributed through the connecting portion 521, thereby preventing deformation (or at least mitigating deformation) of the pressing portion 510. Mitigating deformation of the pressing portion 510 ensures that the pressing portion 510 can more stably press against the cap plate 410.

A diameter of an inner peripheral surface of the contact portion 522 may be smaller than the diameter of the outer peripheral surface of the case 200 such that the contact portion 522 fits tightly against the outer peripheral surface of the case 200. In one embodiment, the thickness of the contact portion 522 may increase from the connecting portion 521 toward the end of the contact portion 522. With this configuration, when the cover 500 is positioned to surround the upper portion of the case 200, the case 200 may exert a radially outwardly applied force on the contact portion 522, and contact portion 522 may exert a radially inwardly elastic force on the case 200. This causes the contact portion 522 to fit tightly against the outer peripheral surface of the case 200, enabling the cover 500 to be press-fitted onto the case 200.

A diameter of an inner peripheral surface of the insertion portion 523 may be at least equal to or greater than the diameter of the outer peripheral surface of the case 200. The insertion portion 523 may have a thickness smaller than the thickness of the contact portion 522 at the end of the contact portion 522 such that the insertion portion 523 does not come into close contact with the outer peripheral surface of the case 200. With this configuration, when the cover 500 is moved down to be positioned to surround the upper portion of the case 200, the upper end of the case 200 may be initially inserted into the insertion portion 523 (and the case 200 may not contact or elastically deform the insertion portion 523), and the contact portion 522 may be elastically deformed by applying a certain force greater than a predetermined level to the cover 500 to fasten the cover 500 to the case 200.

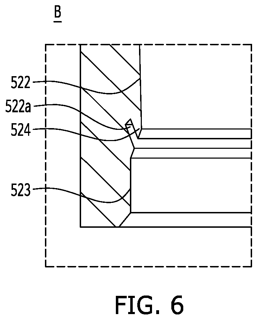

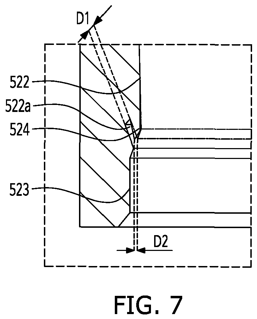

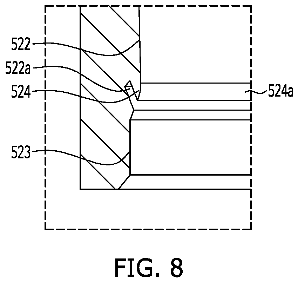

FIG. 6 is an enlarged view illustrating an embodiment of an area B of FIG. 4, FIG. 7 is a cross-sectional view illustrating an embodiment of an elastic deformation portion being deformed according to one embodiment of the present disclosure, and FIG. 8 is a cross-sectional view illustrating another embodiment of an elastic deformation portion according to one embodiment of the present disclosure.

Referring to FIGS. 6 to 8, the fastening portion 520 of the cover 500 according to one embodiment may further include an elastic deformation portion 524 at the end of the contact portion 522 that is configured to be pressed against the case 200 and to elastically bend outward in a radial direction. The contact portion 522 may be thicker than the insertion portion 523 such that a stepped portion may be between the insertion portion 523 and the contact portion 522. The stepped portion may make it difficult for an upper end of the case 200 to be inserted into the contact portion 522.

In one embodiment, the elastic deformation portion 524 may have a cantilever shape at the end of the contact portion 522. When the upper end of the case 200 is inserted into the insertion portion 523 of the cover 500 and the cover 500 is pressed with a certain force greater than a predetermined level, the elastic deformation portion 524 may be bent outward in the radial direction, as shown in FIG. 7, thereby guiding the upper end of the case 200 to be easily introduced into the contact portion 522.

In one embodiment, referring to FIG. 7, the contact portion 522 may include an avoidance groove 522a, which is configured to prevent contact between the elastic deformation portion 524 and the remainder of the contact portion 522 when the elastic deformation portion 524 is deformed. In one or more embodiments, the avoidance groove 522a may have a width D1 such that the elastic deformation portion 524 does not come into contact with an inner peripheral surface of the avoidance groove 522a when the elastic deformation portion 524 is deformed. In one or more embodiments, the width D1 of the avoidance groove 522a may be greater than the deformation amount D2 by which the elastic deformation portion 524 deforms inward toward the avoidance groove 522a.

In one embodiment, as shown in FIG. 8, the elastic deformation portion 524 may have an outer peripheral surface 524a having a rounded (curved) shape. The elastic deformation portion 524 is configured to be pressed by the upper end of the case 200. Thus, the outer peripheral surface 524a of the elastic deformation portion 524 may have a rounded (curved) shape to minimize or at least reduce friction with the upper end of the case 200.

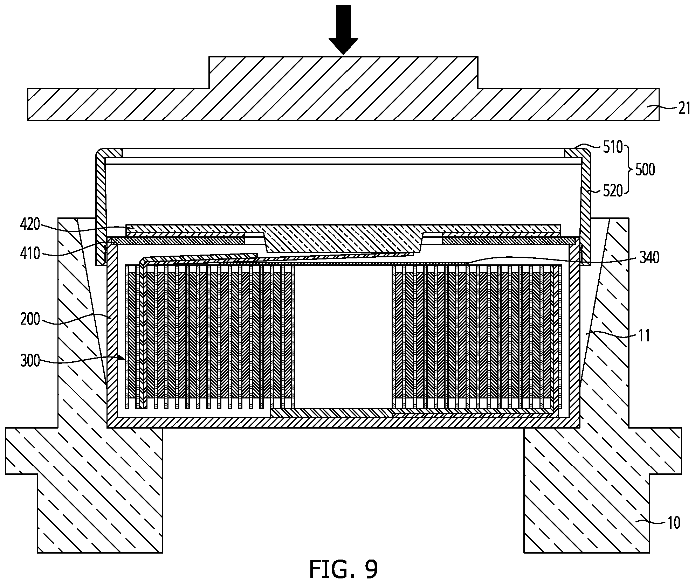

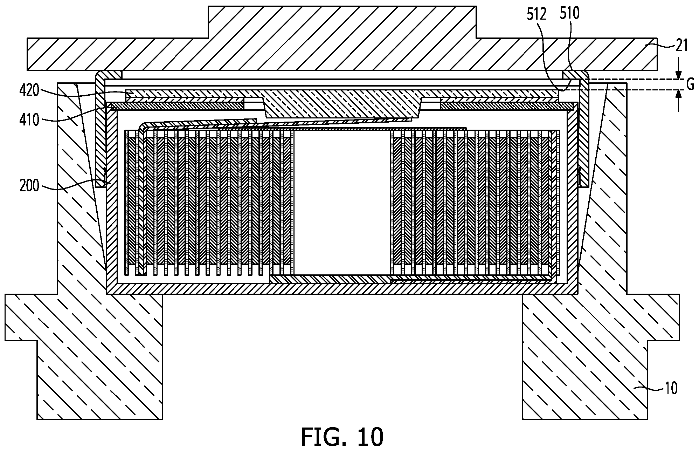

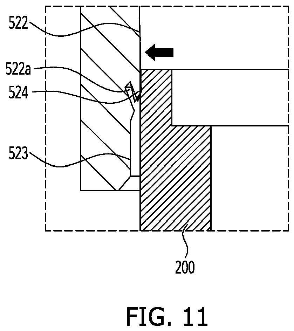

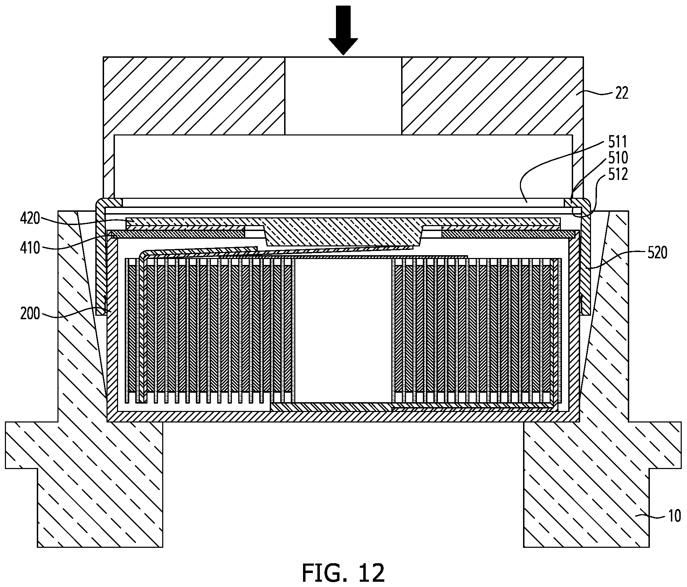

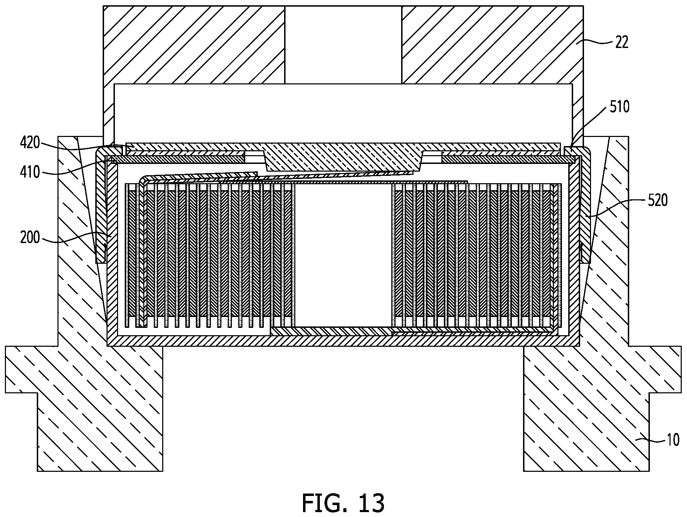

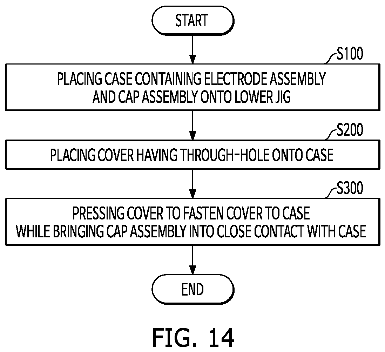

FIG. 9 is a cross-sectional view illustrating a method for manufacturing a secondary battery 100 according to one embodiment of the present disclosure, FIG. 10 is a cross-sectional view illustrating a state where a secondary battery 100 is pressed by a first pressing jig in a method for manufacturing the secondary battery 100 according to one embodiment of the present disclosure, and FIG. 11 is a cross-sectional view illustrating an example of the elastic deformation portion being deformed in a method for manufacturing a secondary battery 100 according to one embodiment of the present disclosure. FIGS. 12 and 13 are cross-sectional views illustrating examples of a state where a secondary battery 100 is pressed by a second pressing jig in a method for manufacturing the secondary battery 100 according to one embodiment of the present disclosure. FIG. 14 is a flowchart illustrating a method for manufacturing a secondary battery 100 according to one embodiment of the present disclosure.

Referring to FIGS. 9 to 14, a method for manufacturing a secondary battery 100 according to one embodiment may include steps of placing the case 200 containing the electrode assembly 300 and the cap assembly 400 onto a lower jig 10 (step S100), placing the cover 500 having the through-hole 511 onto the case 200 (step S200), and pressing the cover 500 to fasten the cover 500 to the case 200 and bring the cap assembly 400 into close contact with the case 200 (step S300).

The step S100 of placing the case 200 may include a step of inserting the case 200 into a receiving recess 11 in the lower jig 10 and securely placing the case 200 in the receiving recess 11. The receiving recess 11 of the lower jig 10 may have a downward slope (a downward taper), and a lower end of the receiving recess 11 may have a diameter that is the same as or similar to a diameter of the outer peripheral surface of the case 200. With this configuration, when the case 200 is inserted into the receiving recess 11, a portion of the lower side of the case 200 may be inserted up to the lower end of the receiving recess 11 and secured in place to prevent movement.

The step S200 of placing the cover 500 may include a step of placing the cover 500 onto an upper portion of the case 200 inserted into the receiving recess 11 of the lower jig 10. At this time, as shown in FIG. 9, the upper end of the case 200 may be inserted into the insertion portion of the cover 500.

The step S300 of pressing the cover 500 may include a step of pressing the cover 500, which is placed on the upper end of the case 200, to fasten the cover 500 to the case 200. In one embodiment, the step S300 of pressing the cover 500 may include a step of pressing an upper surface of the cover 500 until the cover 500 and the cap assembly 400 have a predetermined gap G therebetween, and a step of pressing a perimeter of the cover 500 until the cover 500 is placed onto the upper side of the case 200. In other words, the step S300 of pressing the cover 500 may be divided into a first pressing step in which the cover 500 is pressed until the cover 500 and the cap assembly 400 have the predetermined gap G, and a second pressing step in which the cover 500 is pressed until the cover 500 is placed onto the upper side of the case (200).

In one embodiment, the step of pressing the upper surface of the cover 500 may include a step of pressing the upper surface of the cover 500 until an inner surface 512 of the cover 500 and an upper surface of the cap assembly 400 have a gap G ranging from approximately 0.5 mm to approximately 2.0 mm. The step of pressing the upper surface of the cover 500 may include applying a relatively large force because the upper end of the case 200 has to be inserted while pressing the contact portion 522 of the cover 500. Therefore, a first pressing jig 21 may be utilized to press the entire (or substantially the entire) upper surface of the cover 500. As the first pressing jig 21 presses the cover 500, as shown in FIG. 11, the elastic deformation portion 524 included in the fastening portion may be elastically bent outward in the radial direction by being pressed by the case 200, thereby guiding the insertion of the case 200.

In one embodiment, the first pressing jig 21 may have a disc shape. The cap assembly 400 may be damaged if the first pressing jig 21 comes into contact with the terminal plate 420, and thus the first pressing jig 21 may be used to press the cover 500 downward until there is a gap G of approximately 0.5 mm to approximately 2.0 mm between the inner surface 512 of the cover 500 and the upper surface of the cap assembly 400.

The step of pressing the perimeter of the cover 500 may include a step of pressing the pressing portion 510 of the cover 500 to allow the cap assembly 400 to be in close contact with the case 200. A second pressing jig 22 for pressing the pressing portion 510 may have a cylindrical shape with a hollow portion having at least the same or greater diameter than the through-hole 511 of the cover 500. As the second pressing jig 22 presses the pressing portion 510, as shown in FIG. 13, the hollow portion of the second pressing jig 22 may be aligned and communicate with the through-hole 511 of the cover 500. Thus, the second pressing jig 22 can press the pressing portion 510 such that the pressing portion 510 comes into close contact with the upper side of the case 200 without contacting the terminal plate 420. This allows the cover 500 to be tightly fitted onto the case 200 while preventing the cap plate 410 from being damaged.

Although the present disclosure has been described with reference to embodiments and drawings illustrating aspects thereof, the present disclosure is not limited thereto. Various modifications and variations can be made by a person skilled in the art to which the present disclosure belongs within the scope of the technical spirit of the present disclosure and the claims and their equivalents, below.

## Claims

1. A secondary battery (100) comprising:
an electrode assembly (300) comprising a first electrode (310), a separator (330), and a second electrode (320);
a case (200) accommodating the electrode assembly (300) and electrically connected to the second electrode (320);
a cap assembly (400) closing an opening of the case (200) and electrically connected to the first electrode (310); and
a cover (500) comprising a through-hole (511), the cover (500) being press-fit onto the case (200) to fasten the cap assembly (400) to the case (200).

2. The secondary battery (100) as claimed in claim 1, wherein the cover (500) comprises:
a pressing portion (510) comprising the through-hole (511), the pressing portion (510) being on an upper side of the case (200) and pressing the cap assembly (400) to bring the cap assembly (400) into close contact with the case (200); and
a fastening portion (520) that extends vertically from an outer edge of the pressing portion (510) and is fastened to a side surface of the case (200).

3. The secondary battery (100) as claimed in claim 2, wherein the fastening portion (520) has different thicknesses along an extension direction of the fastening portion (520).

4. The secondary battery (100) as claimed in claim 2, wherein the fastening portion (520) comprises:
a connecting portion (521) connected to the pressing portion (510);
a contact portion (522) that extends from the connecting portion (521) and a thickness greater than that of the connecting portion (521); and
an insertion portion (523) that extends from the contact portion (522) and has a thickness smaller than that of the contact portion (522).

5. The secondary battery (100) as claimed in claim 4, wherein the fastening portion (520) further comprises:
an elastic deformation portion (524) at an end of the contact portion (522), the elastic deformation portion (524) being pressed against the case (200) and elastically bent outward in a radial direction
and/or wherein the elastic deformation portion (524) has a cantilever shape at the end of the contact portion (522).

6. The secondary battery (100) as claimed in claim 5, wherein the contact portion (522) comprises a groove (522a) configured to avoid contact with the elastic deformation portion (524) when the elastic deformation portion (524) is deformed.

7. The secondary battery (100) as claimed in claim 6, wherein the groove (522a) has a width and wherein the elastic deformation portion (524) does not come into contact with an inner peripheral surface of the groove (522a) when the elastic deformation portion (524) is deformed.

8. The secondary battery (100) as claimed in claims 1 to 7, wherein the cap assembly (400) comprises:
a cap plate (410) comprising an insertion hole (411, 431), wherein the cap plate (410) is in a fastening groove (210) at an upper side of the case (200);
a terminal plate (420) on the cap plate (410), the terminal plate (420) comprising a protrusion (421) configured to be inserted into the insertion hole (411, 431) of the cap plate (410) and electrically connected to the first electrode (310); and
an insulator (430) between the cap plate (410) and the terminal plate (420).

9. The secondary battery (100) as claimed in claim 8, wherein the cap plate (410) is in close contact with an inner surface of the cover (500), and wherein the terminal plate (420) is inserted into the through-hole (511) of the cover (500).

10. The secondary battery (100) as claimed in claim 9, wherein a diameter of the through-hole (511) of the cover (500) is greater than a diameter of the terminal plate (420) to avoid contact with the terminal plate (420)
and/or the cover (500) is made from an insulating material such as plastic or the like for electrical insulation purposes.

11. A method for manufacturing a secondary battery (100), the method comprising:
placing a case (200) accommodating an electrode assembly (300) and a cap assembly (400) onto a lower jig (10) (S100);
placing a cover (500) comprising a through-hole (511) onto the case (200) (S200); and
pressing the cover (500) to fasten the cover (500) to the case (200) and bring the cap assembly (400) into close contact with the case (200) (S300).

12. The method as claimed in claim 11, wherein the pressing of the cover (500) comprises:
pressing an upper surface of the cover (500) until a predetermined gap (G) is established between the cover (500) and the cap assembly (400); and
pressing a perimeter of the cover (500) until the cover (500) is on an upper side of the case (200).

13. The method as claimed in claim 12, wherein the pressing of the upper surface of the cover (500) comprises pressing the upper surface of the cover (500) until an inner surface (512) of the cover (500) and an upper surface of the cap assembly (400) have a gap (G) in a range of approximately 0.5 mm to approximately 2.0 mm.

14. The method as claimed in claim 12 or 13, wherein the cover (500) comprises:
a pressing portion (510) comprising the through hole (511) and wherein the pressing portion (510) is on the upper side of the case (200); and
a fastening portion (520) that extends vertically from an outer end of the pressing portion (510) and is fastened to a side surface of the case (200).

15. The method as claimed in claim 14, wherein the pressing of the perimeter of the cover (500) comprises pressing the pressing portion (510) to bring the cap assembly (400) into close contact with the case (200).
